# EUROPEAN PATENT SPECIFICATION

(11) **EP 3 354 713 B1**
(45) Date of publication and mention of the grant of the patent: **06.05.2026**
(21) Application number: 17153323.5
(22) Date of filing: 26.01.2017
(51) Int. Cl.: C11B 3/00, C11B 13/00, C11B 7/00, C11B 1/10

(54) **POULTRY GREASE PROCESSING METHOD**
GEFLÜGELFETTVERARBEITUNGSVERFAHREN
PROCÉDÉ DE TRAITEMENT DE GRAISSE DE VOLAILLE

(43) Date of publication of application: 01.08.2018
(73) Proprietor: Huang, Kai-Neng, Tainan City 717 (TW)
(72) Inventor: Huang, Kai-Neng, Tainan City 717 (TW); Tang, Huei-Ping, Tainan City 717 (TW); Huang, Li-Yang, Tainan 717 (TW)
(74) Representative: Anohins, Vladimirs

(56) References cited:
- GB-A- 2 260 684
- JP-A- 2006 124 424
- DATABASE WPI Week 197137, Derwent World Patents Index; AN 1971-60337S, XP002770574
- DATABASE WPI Week 200007, Derwent World Patents Index; AN 2000-073490, XP002770575
- DATABASE WPI Week 201408, Derwent World Patents Index; AN 2014-B85181, XP002770576

## Description

### Field of the invention

The invention relates to a poultry grease processing method, especially to a method extracting the refined poultry oil from the rough poultry grease through a separation process by filtering.

### Previous Art

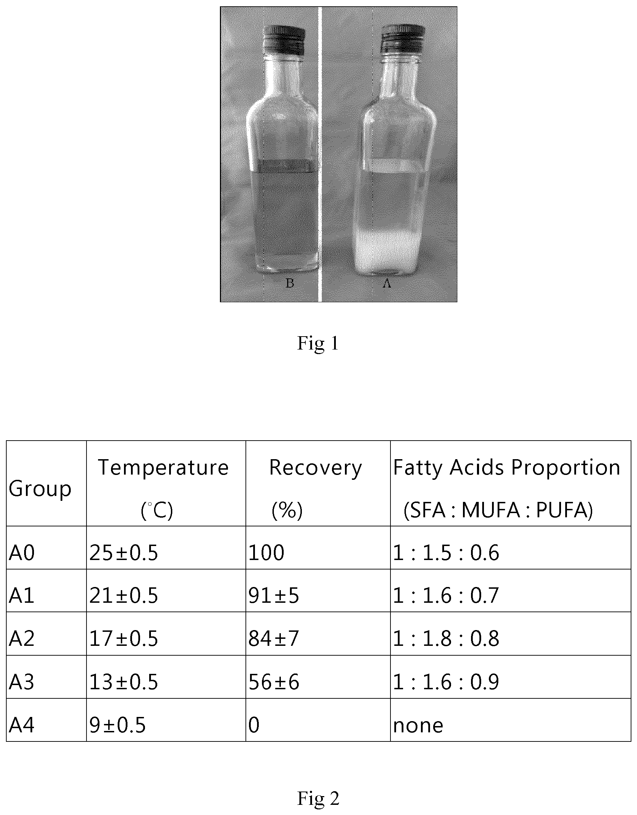

The traditional poultry grease named as rough poultry grease here can be obtained through the process of deep frying, decoction and purification wherein water and impurities are removed. Actually, the traditional poultry grease is less adopted as daily cooking oil because of the solidβ-type grease appearing as white flocky precipitates in the rough poultry grease in indoor temperature (ambient room temperature), just as what is shown in the right bottle A in Fig 1 wherein the white flocky precipitates is apt to arouse improper impression of poor quality or deterioration. On the other hand, just as the rough chicken grease, the proportion of its fatty acids formed by SFA, MUFA and PUFA is 1:1.5:0.6 (Wei et al., Food Science 2012; 33(16): 188-193., Rondelli et al., Brazilian Journal of Poultry Science. 2004; 6 (3): 171-175), which is not the optimal fatty-acid proportion required by body and cannot well profit health as shown in nutritional science. As a result, the chicken fat or rough chicken grease is used as fodder not daily cooking oil although the chicken tops other meats as the most consumed one in the world. And the utilization of other poultry fat or rough grease is similar to that of rough chicken grease. JP S4631880 B (NIPPON SCIENTIFIC COMPOUN, 1971-09-17) discloses a method for processing body fat of chickens into solid and liquid body fat. The method includes simmering chicken abdominal adipose tissue to obtain fat, and resting the fat for a whole day and night at 15°C to allow the solid body fat to precipitate and separating the liquid body fat in the upper layer and the solid body fat in the lower by means of filtering. RO 129095 A2 (SURAKI SRL, 2013-12-30) discloses aprocess for preparing ostrich oil which is used in the pharmaceutical field. The process consists of extraction of oil from the ostrich fat at a temperature of 75-90°C at a pressure of 21 psi for 30 min, primary purification, centrifugation, bleaching, deodorization and drying, and winterization. JP 2006124424 A (MIYOSHI YUSHI KK, 2006-05-18) discloses a fractionating method of oil and fat. The method includes carrying out primary wintering treatment of oil and fat at 28°C-18°C, adding oil and fat having a clouding point larger or equal to 10°C, carrying out secondary wintering treatment, treating the oil and fat by a screw discharge type centrifugal separator and fractionating solid fat content to provide a secondary fractional liquid oil.

According to the above facts, if a poultry grease processing method can be provided to get the refined poultry oil without the white flocky precipitates in indoor temperature, the appearance of poultry grease can be improved and consumers can be attracted; moreover, if a method of processing the poultry grease to acquire a refined poultry oil with profitable fatty acid proportion and making the oil accepted as cooking oil, and then the poor utilization of making a large quantity of poultry grease into fodder can be transformed into a high-valued utilization of obtaining the healthy cooking oil.

### Summary of the invention

The invention is as described in claims. Any information and examples not covered by claims is for explanation purposes only.

Compared to the existing method of producing the rough poultry grease which belongs to the solid β-type grease appearing as white flocky precipitates in indoor temperature which is apt to arouse improper impression of poor quality or deterioration and makes the grease unattractive to consumers, the invention provides a poultry grease processing method including the following steps: the rough poultry grease is preserved by stirring in a low-temperature environment of 13 +/- 2 degrees centigrade with a stirrer that runs with a speed of 5 rpm for hours so as to obtain a mixture composed of liquid oil and solid grease, and then the liquid oil is collected by a filtering method wherein the mixture composed of liquid and solid grease is put into a filtering bag with an aperture between 0,02 and 0,20 mm and filtered with a centrifugal rotation speed between 5 and 500 rpm.

The liquid oil is the refined poultry oil appearing as transparent and clear liquid and attractive for consumers.

Moreover, as the chicken grease, the fatty acid proportion (SFA MUFA: PUFA) of the existing rough chicken grease does not exactly seem profitable to health. The invention provides a chicken grease processing method including steps of adopting a stirrer to stir some rough poultry grease in a low-temperature environment so as to obtain a mixture composed of liquid oil and solid grease. Then, preferably, the mixture is kept still for hours after stirring to let the solid grease subside within a period of time, extracting the liquid oil utilizing the filtering method wherein the mixture is put into a filter bag and the liquid oil is collected through a centrifugal manner. The acquired liquid oil is the refined chicken oil with the healthier fatty acid proportion.

For the invention, the poultry preferably relates to chicken, ducks, gooses or ostriches.

The refined poultry oil with the fatty acid proportion better than that of rough poultry grease can be obtained through the poultry grease processing method provided by the invention.

### Brief Description of the Drawings

Fig 1 shows the appearance difference between the traditional poultry grease and the poultry oil obtained through the poultry grease processing method of the invention.
Fig 2 is the group test result drawing of the poultry grease processing method of the invention.
Fig 3 is the fatty acid analysis chart of the poultry grease processing method of the invention.

### Detailed Description of the Invention

The embodiment of the poultry grease processing method of the invention is introduced according to relative drawings. Firstly, the rough poultry grease is acquired by frying or stewing poultry fat tissue or fat blocks and eliminating impurities and water, which is the traditional method. The poultry of the invention relates to chicken, ducks, gooses or ostriches, and then the chicken grease is taken as an example of the embodiment.

Then, 50-liter of rough chicken grease is put into a stainless barrel (with a diameter of 60 centimeters and a height of 85 centimeters) which is arranged in a low-temperature environment between 11 and 19 degrees centigrade, during which a thermal insulating layer of solid grease will be formed under low temperature and affect the transformation of other grease. Then, blades attached with silicone gaskets are provided by the invention to stir along the barrel wall with a speed of 5 rpm and for an optimal 12 hours or above that so as to prevent solid grease from sticking to the barrel wall and keep the temperature transmission stable (evenly or homogeneously), then to obtain the suspension mixture evenly composed of liquid oil and solid grease or the uniform mixture formed by liquid oil and solid grease; and the solid grease will subside after concretion without rising.

The mixed grease is put into a filtering bag to get the liquid oil by filtering method. It is adopted the nylon filtering bag with the aperture between 0.03 and 0.05mm and to set the rotation speed between 5 and 500rpm, and then all of the liquid oil contained in the 50-liter of mixed chicken grease can be filtered out in 20 minutes or a shorter time, and the filtered liquid is regarded as the refined chicken oil in the embodiment.

The following test is carried out to figure out the differences of the fatty acid proportion (SFA: MUFA: PUFA) between the refined chicken oil and traditional rough chicken grease.

As the Fig 2-the group test result drawing, the rough chicken grease is divided into five groups from which the refined oil is respectively separated at different temperatures and then the recovery and fatty acid proportion is analyzed, wherein the recovery (%) is the ratio between the refined chicken oil and the rough chicken grease and the fatty acid proportion is acquired by analyzing the proportion of fatty acids through the gas chromatograph.

The rough chicken grease is divided into five groups which are respectively preserved under different preset temperatures as following: 25±0.5°C ( group-A0) ^{,} 21±0.5°C ( group-A1) ^{,} 17±0.5°C (group-A2) ^{,} 13±0.5°C ( group-A3) and 9±0.5°C ( group-A4) and are stirred by a stirring blades with a speed of 5 rpm for 12 hours or more than 12 hours.

Each group of rough chicken grease processed under both indoor temperature and low-temperature is filtered with a nylon filtering bag having the 0.05mm aperture and with the 80 rpm centrifugal rotation speed to get most of the liquid chicken oil within about 20 minutes.

The test result of group comparison is as following: the recovery rate of group A0 is 100% as no solid chicken grease is extracted after filtering and its fatty acid proportion is the same with that of the previous rough chicken grease (SFA : MUFA : PUFA=1 : 1.5 : 0.6), and a few of white flocky precipitates will appear in the rough chicken grease of group A0 after preservation of under 25 degrees centigrade for about 24 hours or above, and the recovery rate of liquid chicken oil is 100% as there is no white flocky precipitates within the 12 hours test time. It should be indicated that the recovery rate of the group A1 is 91% and its fatty acid proportion is as equal as that of the previous rough chicken grease; the fatty acid proportions of group A2 and group A3 are dramatically different from that of the rough chicken grease (ANOVA, p<0.05) and actually resembles that of healthy cooking oil (SFA : MUFA : PUFA = 1 : 1.5 : 1) provided by Hayes et al. (Hayes et al. Asia Pac J Clin Nutr. 2002; 11 Suppl 7: S394-400), and especially the fatty acid proportion of group A3 is about the same with that (ANOVA, p>0.05) proposed by Hayes.

What should be addressed is the ratio between the essential fatty acid n-6 and essential fatty acid n-3 in the refined chicken oil of the invention is 12:1 which is just in the optimal range between 10:1 and 25:1 which belongs to the good oil proposed by Simopoulos (Simopoulos et al. Poult Sci. 2000 Jul; 79( 5a 1-70), which can be regarded as the other advantage of the refined chicken oil. According to the report of Simopoulos, the essential fatty acid n-3 can nurse and prevent angiocardiopathy. In addition, the liquid oil recovery rate of group A4 which is processed under the low temperature of 9 degrees centigrade and there is no fatty acid analysis result of group A4 as only the solid grease is obtained.

The refined chicken oil obtained through the above process appears as transparent and clear liquid without white flocky precipitates which has a better commercial value. On that other hand, the fatty acid proportion of the refined chicken oil is different from that of the rough chicken grease, wherein the specific group A3 is provided with the fatty acid having the advantages of healthy cooking oils proposed by Hayes and Simopoulos. The invention promises a bright future of adopting the refined chicken oil as one of the health cooking oils.

Additionally, in the embodiment of the invention, the grease of ducks, gooses and ostriches is grouped and processed under the same low-temperature and with the same steps as the above. Firstly, the rough grease is acquired by frying or stewing fat tissues or fat blocks of ducks, gooses and ostriches and eliminating impurities and water. Then, the acquired rough chicken grease is put into stainless barrels which is arranged in a low-temperature environment between 11 and 19 degrees centigrade, and the blades attached with silicone gaskets are provided to stir the grease with a speed of 5 rpm and for hours or more than12 hours, and then the liquid oil produced under the low-temperature is extracted from the mixed grease by the direct extraction manner or the decantation manner or the filtering method wherein the mixed grease is put into the filtering bag, which is the same with that of the acquiring process of the chicken oil and the detailed process can be learned from above.

The white flocky precipitates will not emerge in the duck, goose, or ostrich liquid oil acquired by the method of the invention even after several days perversion under the indoor temperature, which shows that the refined poultry oil really has a better clear appearance that the traditional rough poultry grease.

As the Fig1, compared to the right-side bottle A in which the rough chicken grease sample having the white flocky precipitates under the indoor temperature is preserved, the left-side bottle B in which the refined chicken oil of the specific group A3 of the invention is preserved looks more transparent under the same temperature.

The fatty acid analysis of the poultry oil refers to that of chicken oil which is carried out according to analysis method authorized by FDA, Taiwan (FDA Taiwan, NFS-0961800343) and with the Shimatzu GC Model-2010 gas chromatography and HP-88 separator tubes (Agilent, 100 m × 0.25 mm I.D., 0.2 µm film thickness), and analyzed by FID detector. The ratio between the peak value of standard fatty acid and that of liquid oil within the same preservation time is taken as the measuring manner and the result is obtained by linear regression.

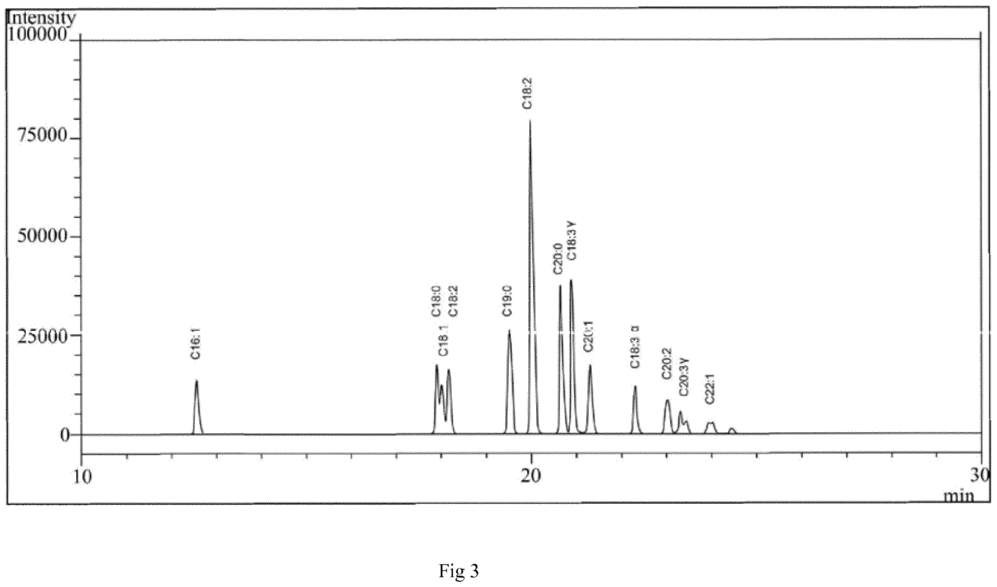

As the Fig 3, the analyzed fatty acids includes the following varieties:
1. (SFA) : (myristic acid)(C14 : 0), (palmitic acid)(C16 : 0) ^{,} (stearic acid)(C18 :
   0)(arachidic acid)(C20 : 0) ;
   SFA: myristic acid (C14 : 0), palmitic acid (C16 : 0), stearic acid (C18 : 0) and arachidic acid (C20 : 0);
2. (MUFA) : (palmtoleic acid)(C16 : 1), (oleic acid)(C18 : 1)(ecosaenoic acid)(C20 : 1) ;
   MUFA: palmtoleic acid (C16: 1), oleic acid (C18: 1) and ecosaenoic acid (C20: 1);
3. (PUFA) : (linoleic acid)(C18 : 2), (y-linolenic acid)(C18 : 3), (α-linolenic acid)(C18 : 3)(ecosadienoic acid)(C20 : 2),PUFA: linoleic acid (C18 : 2),γ-linolenic acid (C18 : 3),α-linolenic acid (C18 : 3) and ecosadienoic acid (C20 : 2). The detection sensitivity is 0.04%(µg/g), and the ratio between SFA, MUFA and PUFA is acquired according to the respective total amount of the above fatty acids, and the total amount of SFA is taken as the denominator to divide that of SFA, MUFA or PUFA to get the result as the ratio.

As the Fig 2, the temperature gradient method is adopted by the invention to test which temperature fits the optimal extraction condition with the preset different temperatures as following in constant-temperature labs : 25°C (group A0) ^{,} 21°C (group A1) ^{,} 17°C(group A2) ^{,} 13°C (group A3) and 9±0.5°C (group A4), wherein the chicken oil is taken as an example with the recovery rates (the ratio between the extracted chicken oil and the rough chicken oil) respectively as 100%, 91±5%, 84±7%, 56±8% and 0% and without rancidity during the whole test process.

The liquid chicken oil is not extracted in the group A4, so the fatty acid proportion analysis is carried out for the four groups from A0 to A3 as following: SFA : MUFA : PUFA equals 1 : 1.6 : 0.9 under the temperature of 13±0.5°C; SFA : MUFA : PUFA equals 1 : 1.8 : 0.8 under the temperature of 17 ±0.5°C; SFA : MUFA : PUFA equals 1 : 1.6 : 0.7 under the temperature of 21±0.5°C; SFA : MUFA : PUFA equals 1 : 1.5 : 0.6 under the temperature of 25±0.5°C. And the fatty acid proportions of the liquid chicken oil acquired in group A3 (not according to the invention as defined in the appended claims) and group A2 are actually within the optimal fatty acid proportion range. After several times of tests, it can be indicated that the liquid chicken oil acquired under the temperature range between 11°C and 19°C has the fatty acid proportion fitting the optimal edible requirement, especially the grease processed under 13±2°C (according to the invention as defined in the appended claims) has a recovery rate of 56±8%, and the oil fatty acid ratio among SFA, MUFA and PUFA equals 1 : 1.6: 0.9, meeting the healthy cooking oil standard proposed by Hayes.

In order to analyze the reason of fatty acid proportion changing, it is inferred that the chicken grease containing palmitic acid and oleic acid is more apt to from the solidβ-form grease than the grease containing other kinds of unsaturated fatty acid. After the solid grease is isolated, the unsaturated fatty acid increases in the left liquid oil and the proportion of fatty acid changes. The invention utilizes the characteristics that the solid form of (oil with different) fatty acids emerges under different temperatures to transform the poultry grease fitting no cooking oil standard into the healthy cooking oil through the way of temperature control with dramatic effects.

Especially, the greases of ducks, gooses and ostriches are respectively processed as the chicken grease. The fatty acid proportion of the liquid oils acquired under the temperature between 11 and 19°C are analyzed to find no proper healthy proportions fitting the standards proposed by published theses but without the white flocky precipitates after many days preservation under the indoor temperature, indicating the effect of making the appearance better with the method of the invention to process the duck, goose or ostrich greases.

## Claims

1. A poultry grease processing method including the following steps: the rough poultry grease is preserved by stirring in a low-temperature environment of 13 +/- 2 degrees centigrade with a stirrer that runs with a speed of 5 rpm for hours so as to obtain a mixture composed of liquid oil and solid grease, and then the liquid oil is collected by a filtering method wherein the mixture composed of liquid and solid grease is put into a filtering bag with an aperture between 0,02 and 0,20 mm and filtered with a centrifugal rotation speed between 5 and 500 rpm.

2. A poultry grease processing method of claim 1, wherein the poultry refers to chickens, ducks, gooses or ostriches.

## Patentansprüche

1. Verfahren zur Verarbeitung von Geflügelfett, umfassend die folgenden Schritte:
Roh-Geflügelfett wird durch Rühren in einer Niedrigtemperaturumgebung von 13 ± 2 °C mit einem Rührer, der mit einer Geschwindigkeit von 5 U/min über mehrere Stunden läuft, aufbewahrt, sodass ein Gemisch aus flüssigem Öl und festem Fett erhalten wird; anschließend wird das flüssige Öl durch ein Filtrationsverfahren gesammelt, wobei das Gemisch aus flüssigem Öl und festem Fett in einen Filterbeutel mit einer Maschenweite von 0,02 bis 0,20 mm eingebracht und bei einer zentrifugalen Drehzahl von 5 bis 500 U/min filtriert wird.

2. Verfahren zur Verarbeitung von Geflügelfett nach Anspruch 1, wobei das Geflügel sich auf Hühner, Enten, Gänse oder Strauße bezieht.

## Revendications

1. **Procédé** de traitement de graisse de volaille comprenant les étapes suivantes : la graisse de volaille brute est maintenue sous agitation dans un environnement à basse température de 13 ± 2 degrés Celsius à l'aide d'un agitateur fonctionnant à une vitesse de 5 tr/min pendant plusieurs heures afin d'obtenir un mélange composé d'huile liquide et de graisse solide, puis l'huile liquide est recueillie par un procédé de filtration dans lequel le mélange composé d'huile liquide et de graisse solide est placé dans un sac filtrant présentant une ouverture comprise entre 0,02 et 0,20 mm et filtré à une vitesse de rotation centrifuge comprise entre 5 et 500 tr/min.

2. Procédé de traitement de graisse de volaille selon la revendication 1, dans lequel la volaille désigne les poulets, les canards, les oies ou les autruches.
